# EUROPEAN PATENT SPECIFICATION

(11) **EP 1 310 822 B1**
(45) Date of publication and mention of the grant of the patent: **03.08.2011**
(21) Application number: 01309551.8
(22) Date of filing: 13.11.2001
(51) Int. Cl.: G02F 1/1343, G02F 1/1362, G02F 1/1335

(54) **Electrode array of in-plane switching mode liquid crystal display**
Elektrodenanordnung für eine in der Ebene schaltende Flüssigkristall-Anzeigevorrichtung
Réseau d'électrodes pour un dispositif d'affichage à cristal liquide à commutation dans le plan

(43) Date of publication of application: 14.05.2003
(73) Proprietor: HannStar Display Corp., Taipei City (TW)
(72) Inventor: Yang, Kie-Hsiung, Yang-Mei Chen, Taoyuan Hsien, Taiwan (CN); Lin, Sheng-Hsien, Shan-Hua Chen, Tainan Hsien, Taiwan (CN)
(74) Representative: Musker, David Charles

(56) References cited:
- EP-A- 0 943 953
- US-A- 5 760 856
- US-B1- 6 188 458
- US-B1- 6 337 726
- PATENT ABSTRACTS OF JAPAN vol. 2000, no. 08, 6 October 2000 (2000-10-06) -& JP 2000 131714 A (HITACHI LTD), 12 May 2000 (2000-05-12) -& US 6 356 330 B1 (ANDO) 12 March 2002 (2002-03-12)
- "HIGH APERTURE RATIO I.P.S. MODE TFT/LCD" RESEARCH DISCLOSURE, KENNETH MASON PUBLICATIONS, HAMPSHIRE, GB, no. 417, January 1999 (1999-01), page 147 XP000888506 ISSN: 0374-4353
- PATENT ABSTRACTS OF JAPAN vol. 2000, no. 02, 29 February 2000 (2000-02-29) -& JP 11 311808 A (TOSHIBA CORP), 9 November 1999 (1999-11-09)

## Description

### BACKGROUND OF THE INVENTION

### Field of the Invention

The present invention relates in general to an in-plane switching mode liquid crystal display (IPS-LCD). In particular, the present invention relates to an electrode array of an IPS-LCD and methods of fabrication thereof.

### Description of the Related Art

Liquid crystal displays (LCDs) may be classified by the orientation of the liquid crystal molecules between the spaced apart substrates. In a conventional twisted nematic (TN)-LCD, the liquid crystal molecules are twisted between the two substrates. In contrast, in an in-plane switching mode (IPS)-LCD, common electrodes and pixel electrodes are formed on a lower glass substrate (TFT substrate) and an in-plane electrode field therebetween is generated to rearrange the liquid crystal molecules along the electrode field. Accordingly, the IPS-LCD has been used or suggested for improving drawbacks of the conventional TN-LCD, such as a very narrow viewing angle and a low contrast ratio.

In order to achieve a better result of the in-plane electrode field, various designs for an electrode array of the IPS-LCD are built to solve the problems such as an insufficient aperture ratio, crosstalk produced between data lines and common electrodes, and increasing masks used in patterning. Specially, JP 56-91277 discloses with respect to a comb-shaped electrode array. Please refer to Fig.1A, which shows a circuit structure of a conventional IPS-LCD. The IPS-LCD has gate lines 1, data lines 5 crossing over the gate lines 1, a thin film transistor (TFT) 2 formed at the intersection of the gate line 1 and the data line 5, a comb-shaped pixel electrode 4, and a comb-shaped common electrode 3. In the TFT 2, a source electrode is electrically connected to the data line 5, and a drain electrode is electrically connected to one end of the comb-shaped pixel electrode 4. The common electrode 3 has a bar parallel to the gate line 1 and a plurality of comb-teeth extending away from the bar and parallel to the data line 5 toward a first direction. The pixel electrode 4 has a bar parallel to the gate line 1 and a plurality of comb-teeth extending away from the bar and parallel to the data line 5 toward a second direction. The comb-teeth of the common electrode 3 are separated from the comb-teeth of the pixel electrode 4 by a predetermined distance. When the common electrode 3 and the pixel electrode 4 are respectively grounded, an in-plain electrode field is generated therebetween.

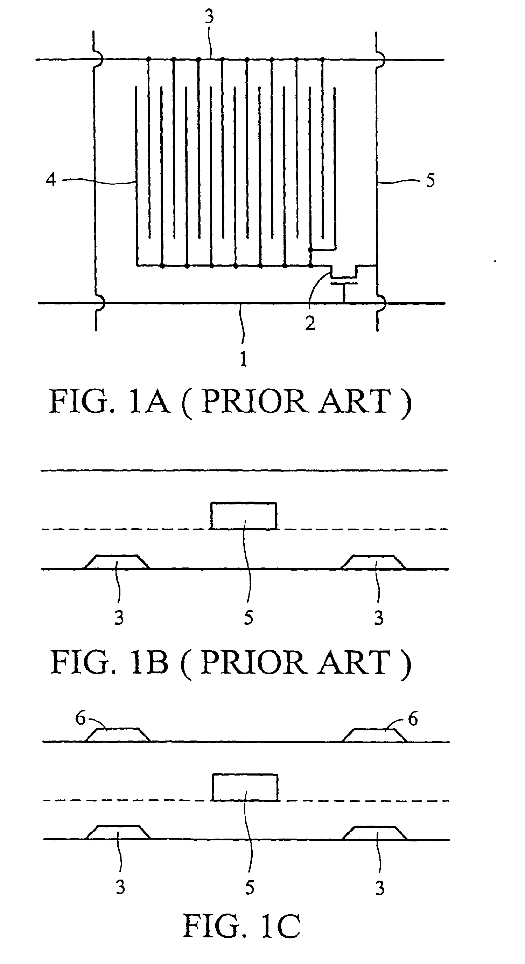

In the comb-shaped electrode array, for increasing the storage of signals, a storage capacitor can be fabricated on the bar of the common electrode 3. However, no reference discloses with respect to a technique for employing a conductor to cover the storage capacitor and connect to the pixel electrode. As well, with reference to a cross-sectional diagram as shown in Fig. 1B, crosstalk easily occurs between the comb-teeth of the common electrode 3 and the data line 5.

Japanese application number JP 2000-131714 discloses an active matrix liquid crystal display device of a common wire eliminated (common-less) type, with a counter electrode arranged above a signal wire and a thin film transistor (TFT) through an insulating layer. By covering (or light shielding) the signal wire or TFT with the counter electrode and a scanning wire, a black matrix (BM) can be eliminated (or reduced) and the substrate can be planarised. This leads to a uniform and improved numerical aperture and cell gap.

JP- 11-311808 f US Application number US 6,337,726 discloses pixel regions in which an end of the display pixel electrode is layered over an opposite signal line, forming a supplemental capacity, the other end being electrically connected to a switching element. The display pixel electrode and the opposite electrodes are formed by processing the same conductive layer as that forming the display signal lines.

### SUMMARY OF THE INVENTION

An object of the present invention is to provide a comb-shaped electrode array of an IPS-LCD to increase the storage of signals.

Another object of the present invention is to provide a comb-shaped electrode array of an IPS-LCD to eliminate the crosstalk produced between the common electrode and the data line.

An aspect of the present invention is set out in claim 1. Features of preferred embodiments are set out in claims 2-5.

It is an advantage of the present invention that the connecting layer can increase the signal storage capacity. Also, the strip-shaped shielding layers disposed over the comb-teeth of the common electrode can eliminate cross-talk.

This and other objective of the present invention will no doubt become obvious to those of ordinary skill in the art after having read the following detailed description of the preferred embodiment which is illustrated in the various figures and drawings.

### BRIEF DESCRIPTION OF THE DRAWING

The present invention can be more fully understood by reading the subsequent detailed description in conjunction with the examples and references made to the accompanying drawings, wherein:
Fig.1A shows a circuit structure of a conventional IPS-LCD. Fig.1B shows a cross-sectional diagram according to a conventional IPS-LCD.
Fig.1C shows a cross-sectional diagram according to IPS-LCD.
Fig.2 shows a top view of the electrode array of the IPS-LCD.
Figs. 3A to 3E are cross-sections along lines of I-I', II-II', III-III' shown in Fig.2 to show a method for forming the electrode array by using an ES type.
Figs. 4A to 4E are cross-sections along lines of I-I', II-II', III-III' shown in Fig.2 to show a method for forming the electrode array by using a BC type.
Fig.5 shows a top view of the electrode array of another IPS-LCD.
Figs. 6A and 6B show top views of the electrode array of the IPS-LCD according to the present invention.
Fig. 7 shows a cross-sectional diagram along lines I-I', II-II', III-III in Fig.6.
Fig.8 shows a cross-sectional diagram along line 8-8' in Fig.6.
Figs. 9A and 9B show top views of the electrode array of another IPS-LCD according to the second embodiment of the present invention.

### DETAILED DESCRIPTION OF THE PREFERRED EMBODIMENT

The present invention provides a comb-shaped electrode array of an IPS-LCD as recited in claim 1, which employs a conductor to cover a storage capacitor and is connected with one end of the comb-teeth of a pixel electrode to increase signal storage capacity. A metal-shielding layer is also provided for eliminating the crosstalk produced between a common electrode and a data line. Compared with the prior art as shown in Fig.1B, as shown in Fig.1C, a metal-shielding layer 6 is formed over the common electrode 3 to provide a shielding effect between the comb-teeth of the common electrode 3 and the data line 5. The metal-shielding layer 6, the data line 5 and the common electrode 3 which constitute a three-dimensional array can eliminate crosstalk and thereby promote the image quality of the IPS-LCD.

### [First Embodiment]

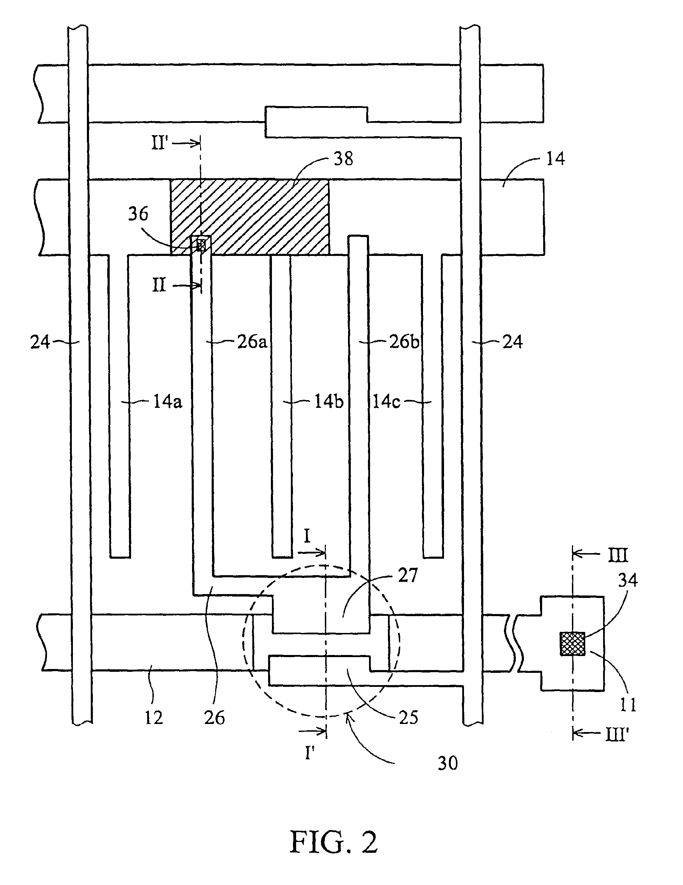

Please refer to Fig.2, which shows a top view of the electrode array of the IPS-LCD. In the IPS-LCD, each pixel area is defined by two gate lines 12 disposed in an X-direction and two data lines 24 disposed in a Y-direction, wherein a comb-shaped common electrode 14 and a comb-shaped pixel electrode 26 are disposed. Preferably, the comb-shaped common electrode 14 has a bar in the X-direction and three comb-teeth 14a, 14b, 14c extending away from the bar along the Y-direction. The comb-shaped pixel electrode 26 has a bar in the X-direction and two comb-teeth 26a, 26b extending away from the bar along the Y-direction, wherein the two comb-teeth 26a, 26b are inter-digitated with the three comb-teeth 14a, 14b, 14c. Therefore, each pixel area is divided into four sub-pixel areas. Also, a TFT 30 has a gate electrode formed on a predetermined area of the gate line 12, a drain electrode 27 electrically connected to the bar of the pixel electrode 26, and a source electrode 25 electrically connected to the data line 24, wherein a channel is formed between the drain electrode 27 and the source electrode 25. Furthermore, the IPS-LCD comprises a first via 34 for exposing the gate pad 11, a second via for exposing the end of the comb-tooth 26a of the pixel electrode 26, and a connecting layer 38 for filling the first via 34, the second via 36 and part of the bar of the common electrode 14. As a result, the connecting layer 38 can electrically connect with the comb-tooth 26a through the second via 36, and the coverage of the bar of the common electrode 14 by the connecting layer 38 can serve as a storage capacitor.

Hereinafter, two methods of fabricating the TFT 30 are provided, such as an etching stopper (ES) type and a back channel (BC) type, to explain the method of forming the electrode array in the first embodiment.

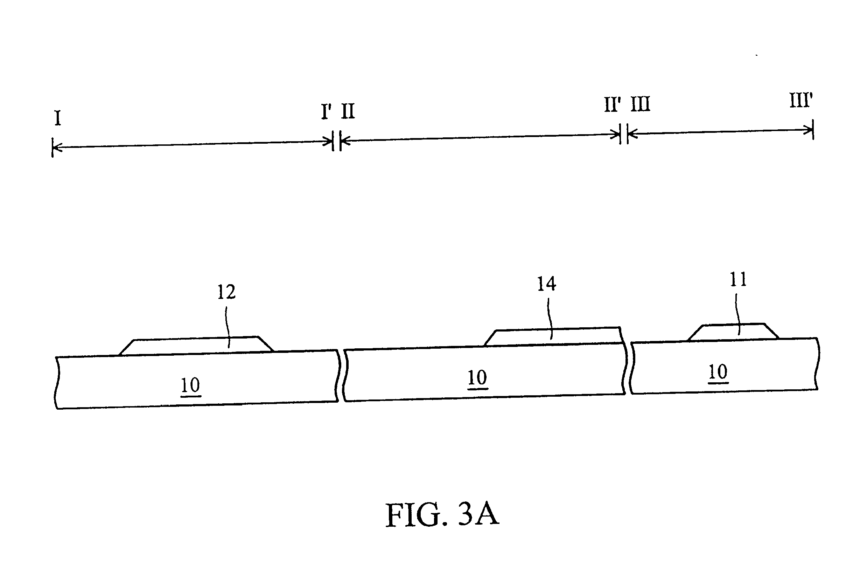

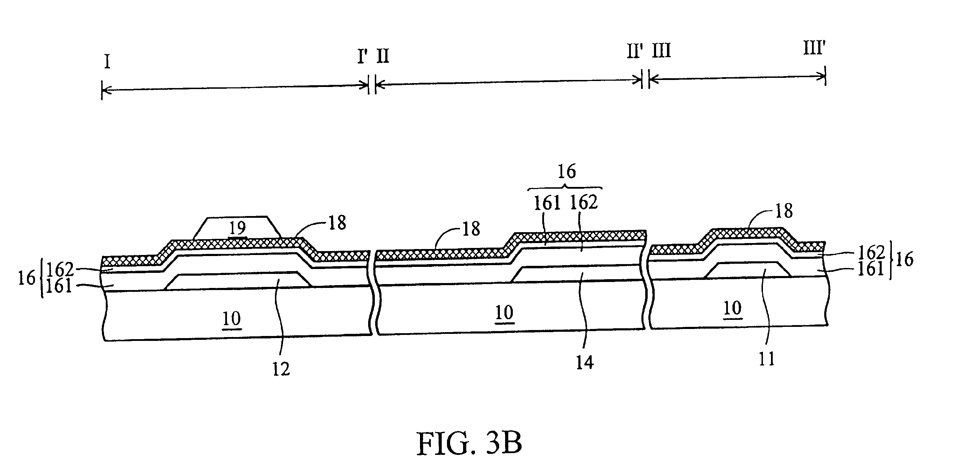

Please refer to Figs. 3A to 3E, cross-sections along lines of I-I', II-II', III-III' shown in Fig.2 to show a method for forming the electrode array using an ES type. As shown in Fig.3A, a first metal layer is formed on a glass substrate 10 and then patterned by a first mask to form the gate line 12 and the comb-shaped common electrode 14, wherein a predetermined area of the gate line 12 serving as the gate electrode, the end of the gate line 12 serving as the gate pad 11, and the bar of the common electrode 14 are depicted in the cross-sectional diagram. As shown in Fig.3B, an insulating layer 16, a first semiconductor layer 18 and a silicon nitride layer 19 are sequentially formed on the substrate 10, wherein the insulating layer 16 is a silicon oxide layer 161 and a silicon nitride layer 162, and the first semiconductor layer 18 is amorphous silicon (a-Si). Next, a second mask is employed to pattern the silicon nitride layer 19 as an etching stopper 19 that only remains over the gate electrode.

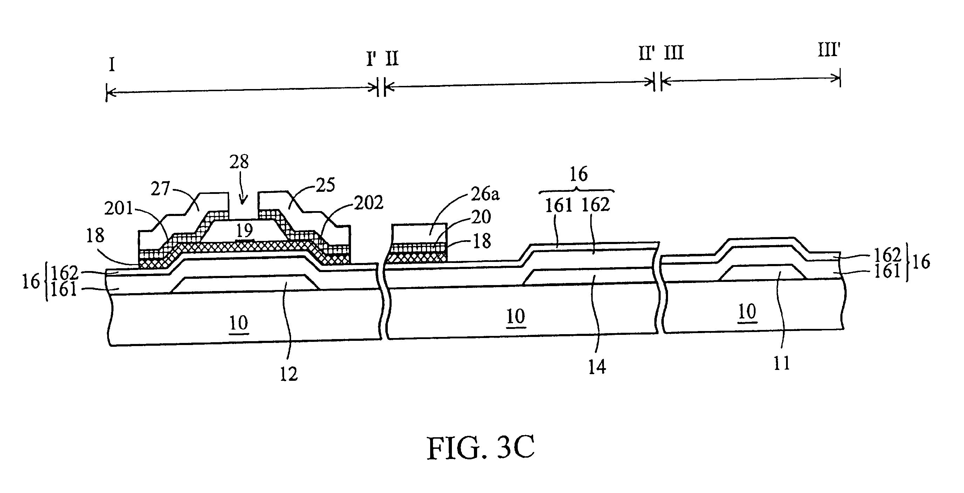

As shown in Fig.3C, a second semiconductor layer 20 made of doped amorphous silicon, such as n⁺ a-Si and a second metal layer are sequentially formed on the substrate 10. Next, a third mask is employed to pattern the first semiconductor layer 18, the second semiconductor layer 20 and the second metal layer as an island structure over the gate electrode, wherein an opening 28 is formed to expose the etching stopper 19 and thereby the separated parts of the second metal layer respectively serve as the drain electrode 27 and the source electrode 25, the separated parts of the second semiconductor layer 20 respective serve as a drain region 201 and a source region 202. At the same time, the second metal layer is patterned to serve as the data line 24 and comb-shaped pixel electrode 26.

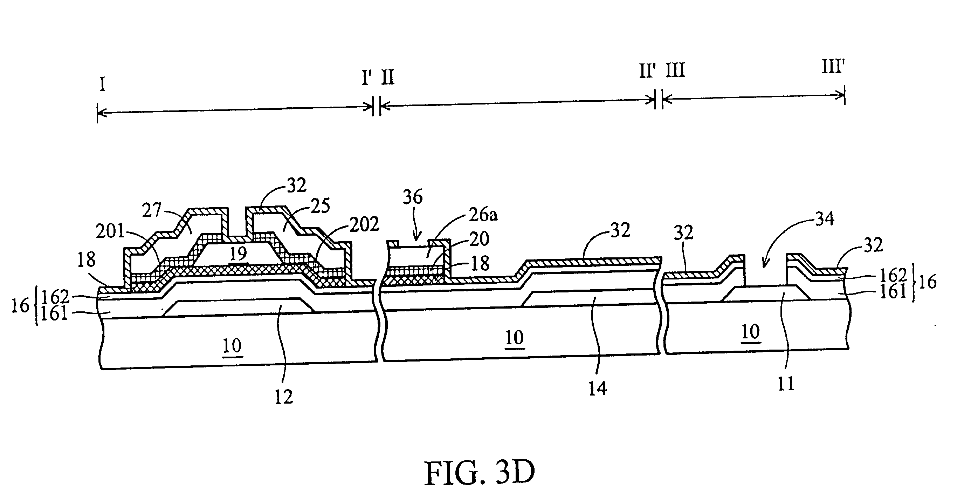

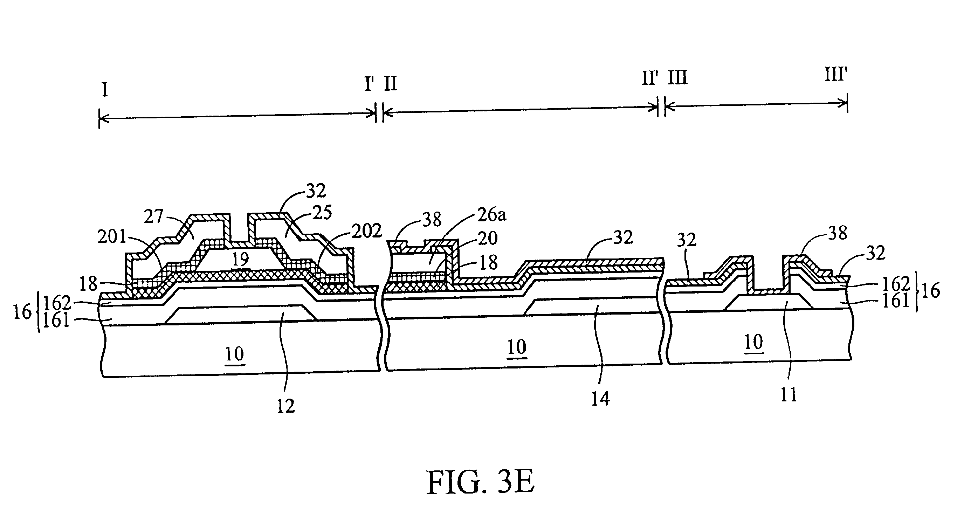

As shown in Fig.3D, a protective layer 32 made of silicon nitride is covered on the substrate 10, and then a fourth mask is employed to define the first via 34 that exposing the gate pad 11 and the second via 36 that exposing the end of the comb-tooth 26a of the pixel electrode 26. Finally, as shown in Fig.3E, a conductive layer is formed on the substrate 10 and then patterned by a fifth mask, wherein the conductive layer remaining in the second via 36 and on part of the bar of the common electrode 14 serves as the connecting layer 38. The connecting layer 38 can be made by the same opaque materials with the first metal layer and the second metal layer, such as MoW · Mo/Al · AlNd. Preferably, the connecting layer 38 can be made by transparent materials, such as indium tin oxide (ITO) to increase aperture ration of each pixel area.

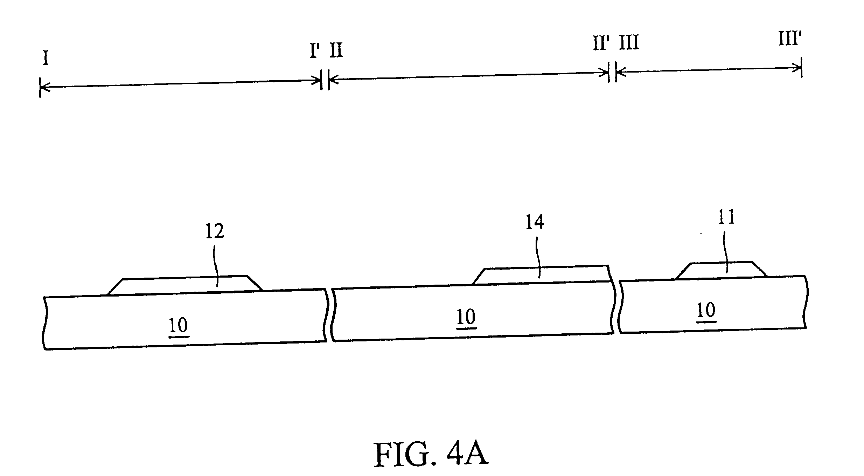

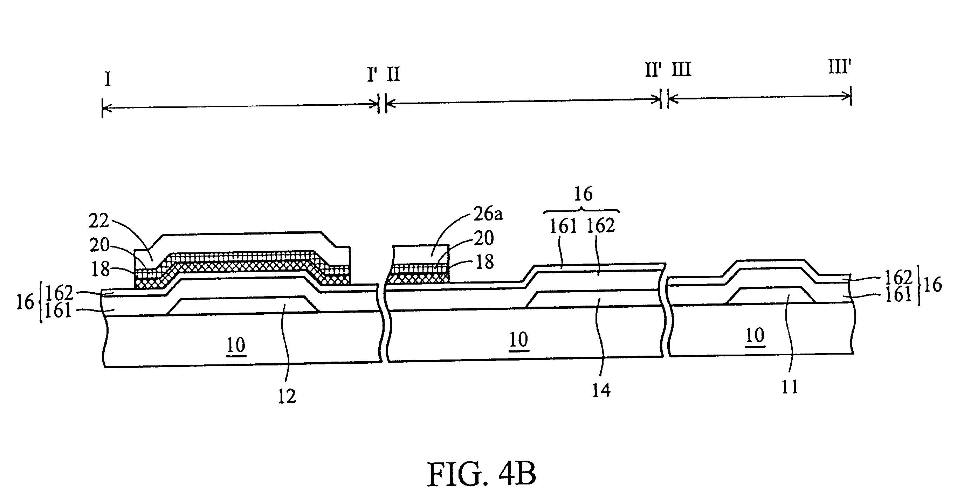

Please refer to Figs. 4A to 4E, which are cross-sections along lines of I-I', II-II', III-III' shown in Fig.2 to show a method for forming the electrode array using a BC type. As shown in Fig.4A, a first metal layer is formed on a glass substrate 10 and then patterned by a first mask to form the gate line 12 and the comb-shaped common electrode 14, wherein a predetermined area of the gate line 12 serves as the gate electrode, the end of the gate line 12 serves as the gate pad 11, and the bar of the common electrode 14 is depicted in the cross-sectional diagram. As shown in Fig.4B, an insulating layer 16, a first semiconductor layer 18, a second semiconductor layer 20 and a second metal layer 22 are sequentially formed on the substrate 10, wherein the insulating layer 16 is a silicon oxide layer 161 and a silicon nitride layer 162, the first semiconductor layer 18 is amorphous silicon (a-Si), and the second semiconductor layer 20 is doped amorphous silicon (n⁺ a-Si). Next, a second mask is employed to pattern the first semiconductor layer 18, the second semiconductor layer 20 and the second metal layer 22 as an island structure over the gate electrode. At the same time, the second metal layer 22 is patterned to serve as the data line 24 and comb-shaped pixel electrode 26.

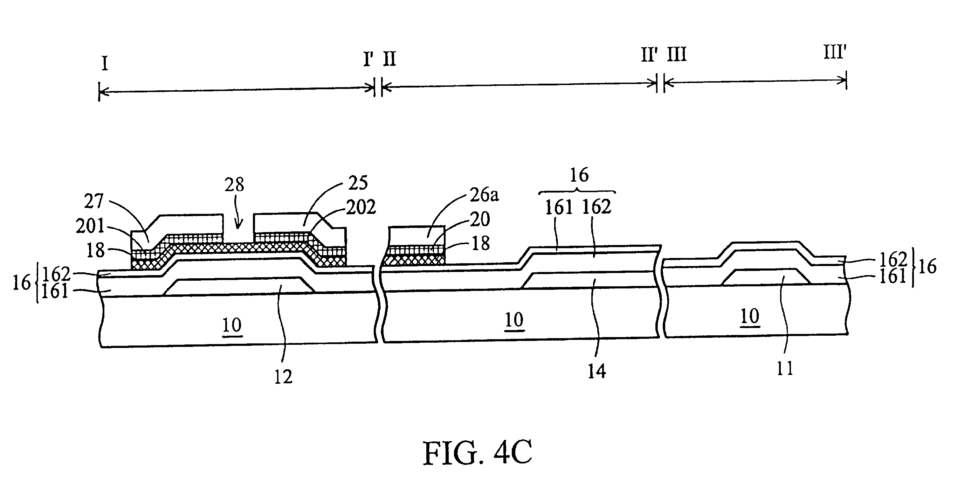

As shown in Fig.4C, by using a third mask, an opening 28 is formed on the island structure to expose the first semiconductor layer 18, and thereby the separated parts of the second metal layer 22 respectively serve as the drain electrode 27 and the source electrode 25, the separated parts of the second semiconductor layer 20 respectively serving as a drain region 201 and a source region 202.

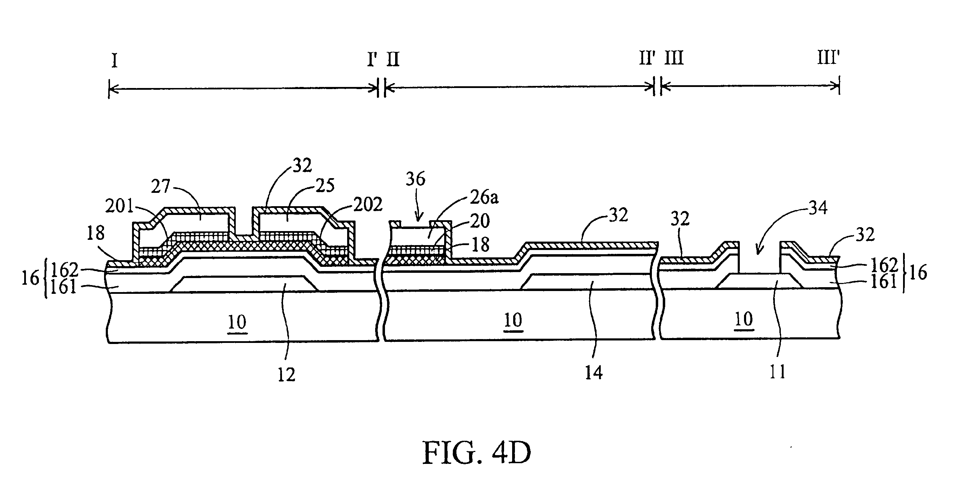

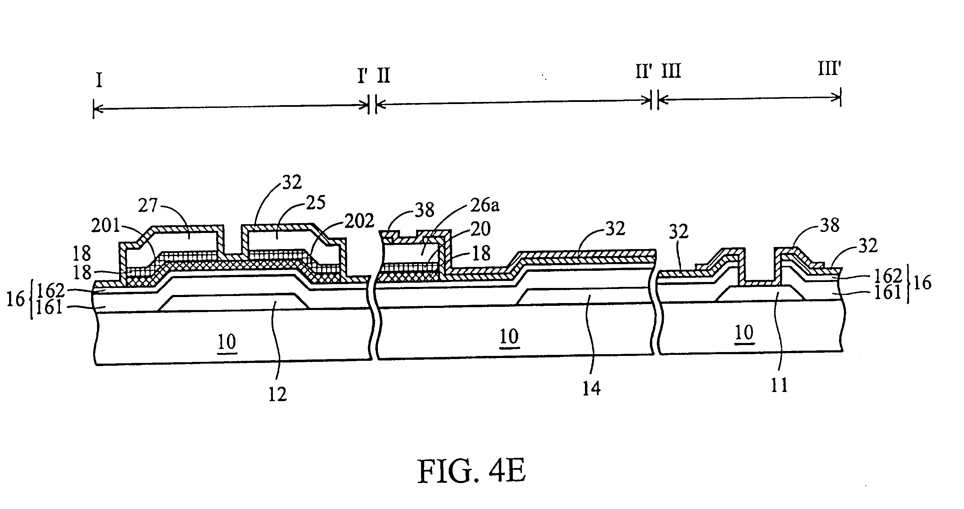

As shown in Fig.4D, a protective layer 32 made of silicon nitride is formed on the substrate 10, and then a fourth mask is employed to define the first via 34, exposing the gate pad 11, and the second via 36, exposing the end of the comb-tooth 26a of the pixel electrode 26. Finally, as shown in Fig.4E, a conductive layer is formed on the substrate 10 and then patterned by a fifth mask, wherein the conductive layer remaining in the second via 36 and on part of the bar of the common electrode 14 serves as the connecting layer 38.

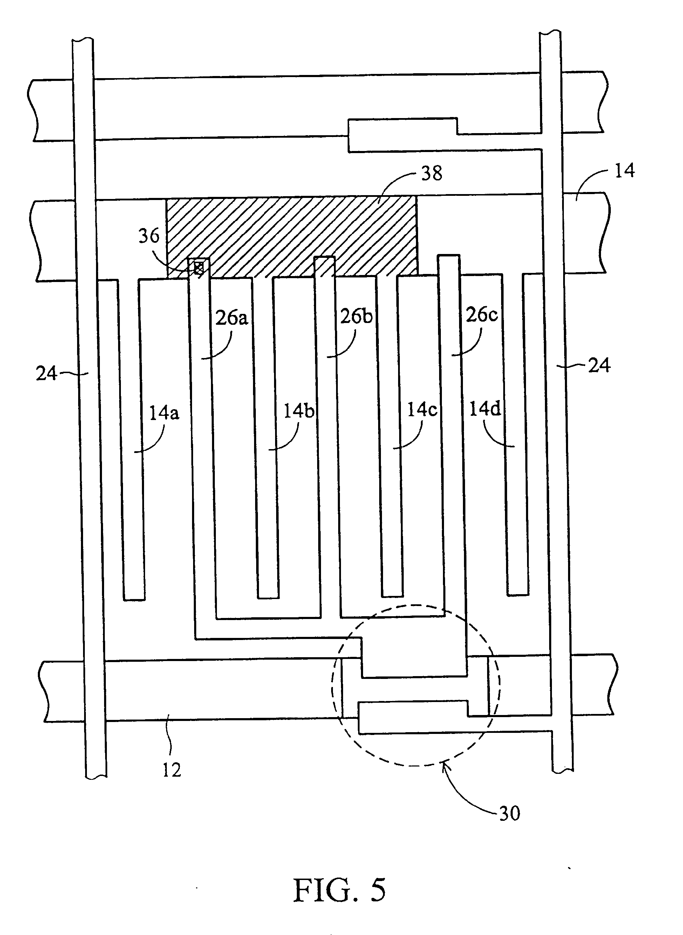

In addition, the above-mentioned electrode array and methods of fabrication thereof are applied to another IPS-LCD with six sub-pixel area per pixel area. Please refer to Fig.5, which shows a top view of the electrode array of another IPS-LCD. In each pixel area, the comb-shaped common electrode 14 has four comb-teeth 14a, 14b, 14c, 14d, and the comb-shaped pixel electrode 26 has three comb-teeth 26a, 26b, 26c. Therefore, the inter-digitated comb-teeth divide each pixel area into six sub-pixel areas. According to the above-mentioned methods, the second via 36 is formed to expose the end of the comb-tooth 26a, and the connecting layer 38 is covered on part of the bar of the common electrode 14 and fills the second via 36.

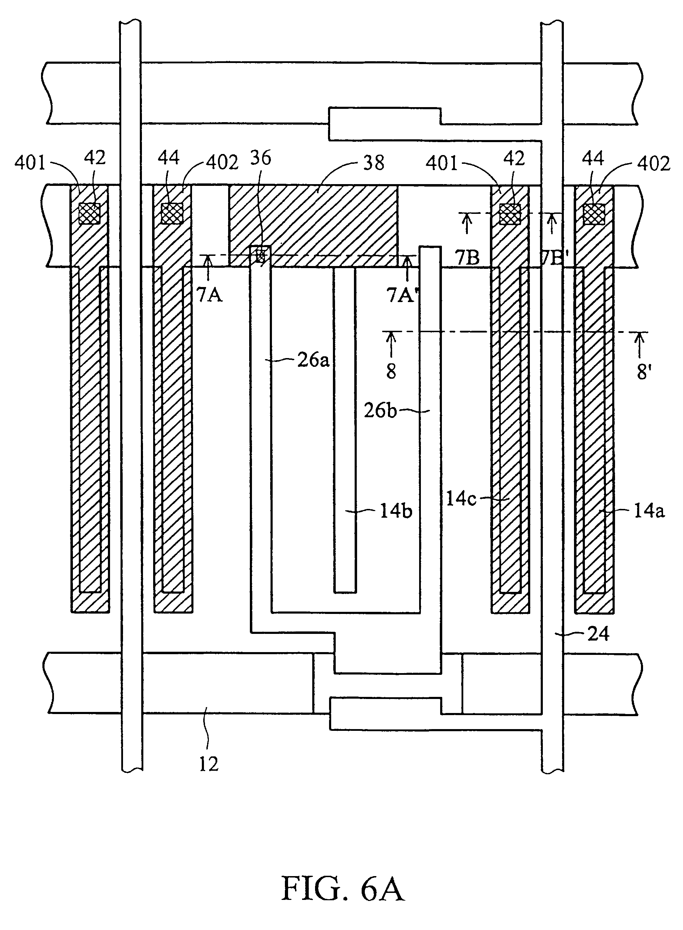

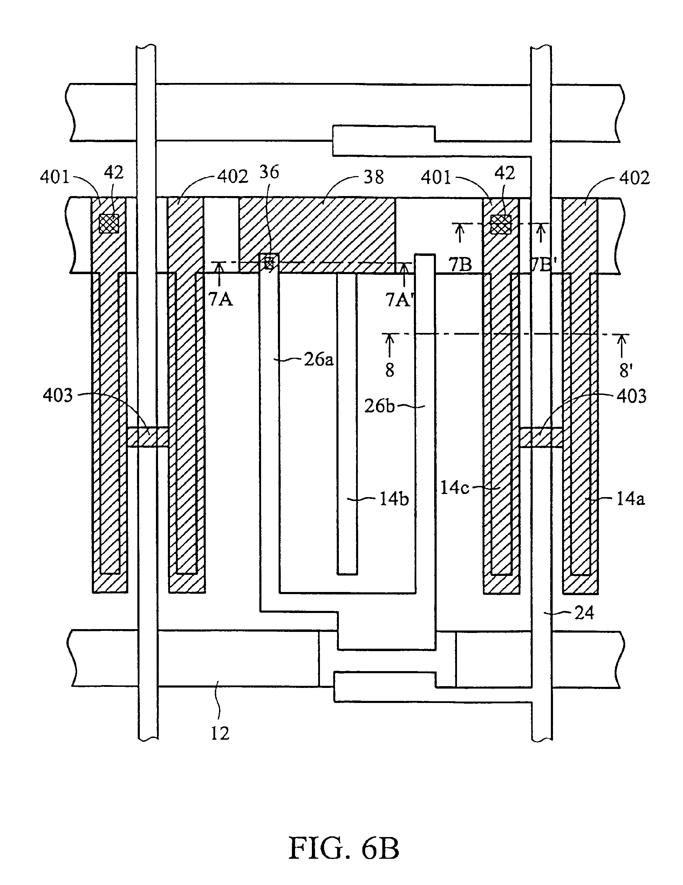

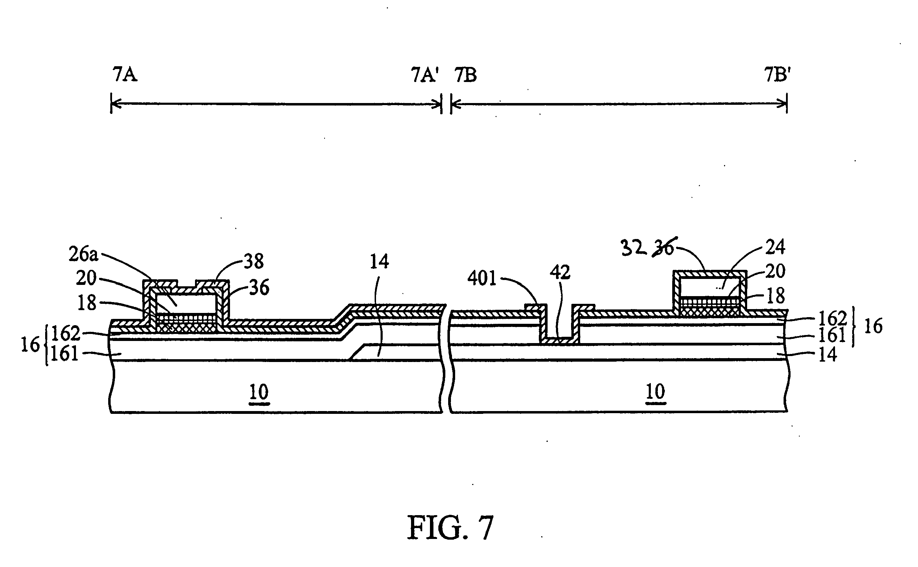

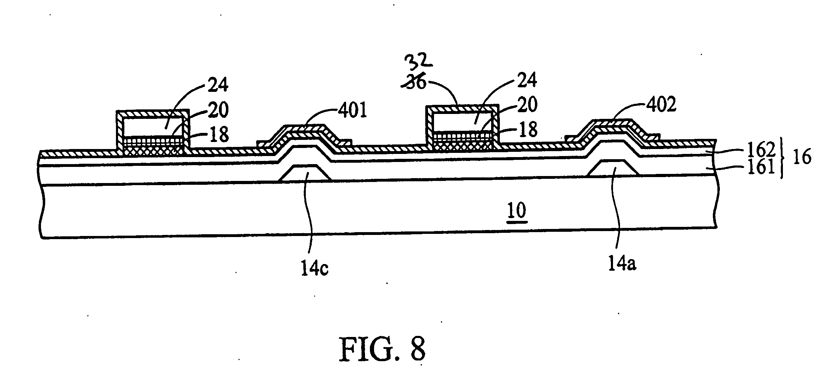

The invention provides a metal-shielding layer to further improve aperture ratio and eliminate crosstalk. Please refer to Figs. 6 to 8, wherein Figs. 6A and 6B show top views of the electrode array of the IPS-LCD according to the second embodiment of the present invention, Fig. 7 shows a cross-sectional diagram along lines I-I' , II-II', III-III' in Fig. 6, and Fig. 8 shows a cross-sectional diagram along line 8-8' in Fig. 6. As shown in Fig. 6A, on the bar of the common electrode 14, a third via 42 and a fourth via 44 passing through the protective layer 32 are respectfully formed on two predetermined regions to which the comb-teeth 14c, 14a extend at the same time that the first via 34 and the second via 36 are patterned by the fourth mask. Next, when using the fifth mask to pattern the conductive layer, not only the connecting layer 38, but also a first strip-shaped metal-shielding layer 401 and a second strip-shaped metal-shielding layer 401 are formed. The first metal-shielding layer 401 covers the comb-tooth 14c, extends to cover the bar of the common electrode 14, and fills the third via 42. The first metal-shielding layer 401 neither covers the data line 24 nor connects to the connecting layer 38. The second metal-shielding layer 402 covers the comb-tooth 14a, extends to cover the bar of the common electrode 14, and fills the fourth via 44. The second metal-shielding layer 402 does not cover the data line 24 nor connect to the connecting layer 38. With respect to the first metal-shielding layer 401 in a pixel area and the second metal-shielding layer 402 in an adjacent pixel area, the first metal-shielding layer 401 and the second metal-shielding layer 402 are electrically connected with each other through the third via 42 and the fourth via 44. Besides, if the fourth via 44 is not fabricated, as shown in Fig. 6B, a third metal-shielding layer 403 can be formed when the conductive layer is patterned by the fifth mask, wherein the third metal-shielding layer 403 crosses the data line 24 to connect the first metal-shielding layer 401 and the second metal-shielding layer 402.

As shown in Figs. 7 and 8, the comb-teeth 14a, 14c of the common electrode 14, the data line 24 and the metal-shield layers 401, 402 are placed on different layers, and thereby the three-dimensional array provides the preferable shielding effect to eliminate crosstalk produced between the common electrode 14 and the data line 24. Also, since the fifth mask forms the metal-shielding layers 401, 402, 403, there is no need to use extra masks. Furthermore, when the metal-shielding layers 401, 402, 403 are made by ITO, the aperture ratio of the IPS-LCD is highly improved.

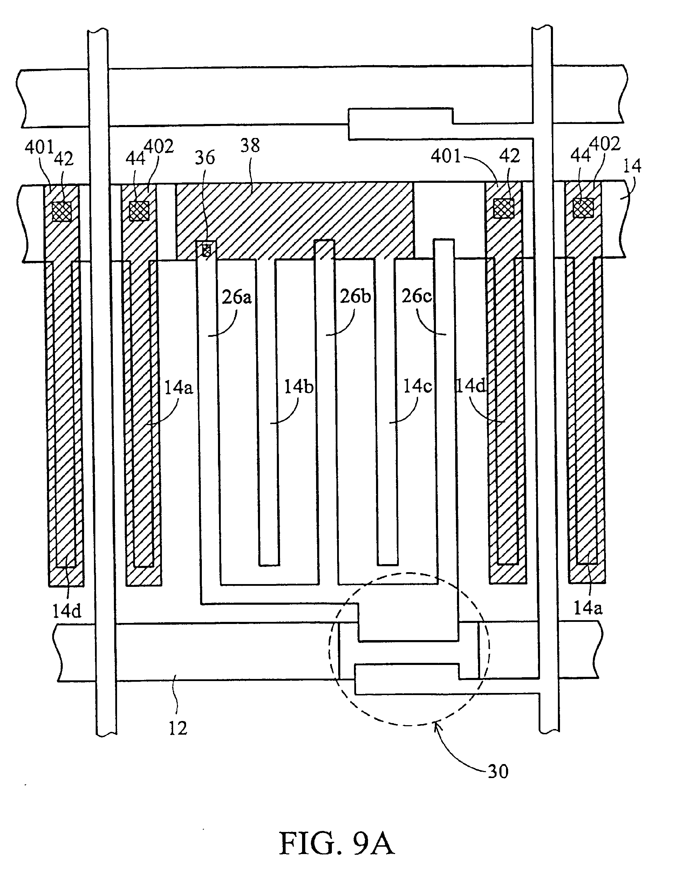

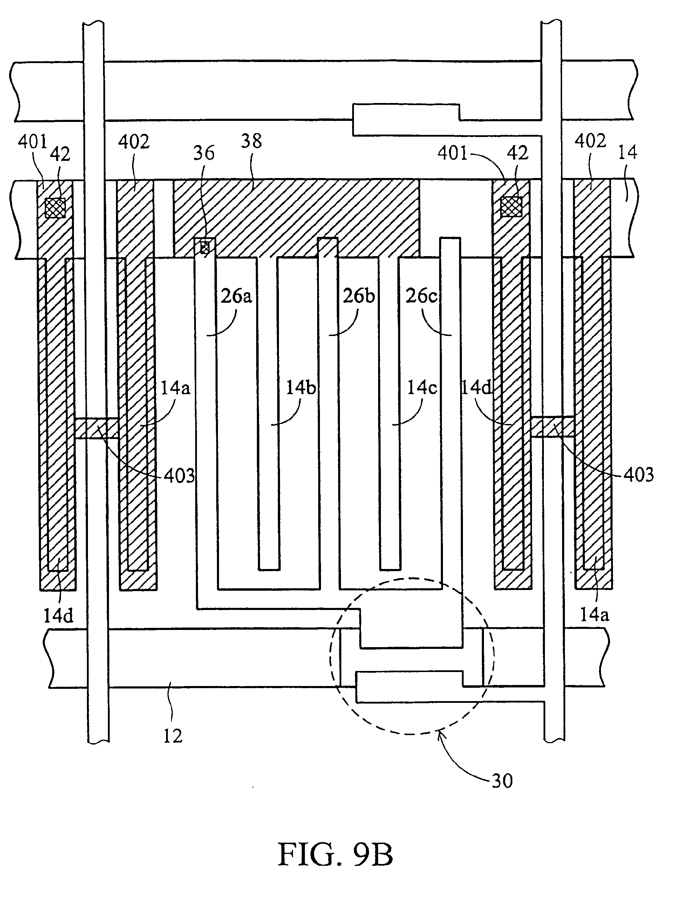

In addition, the above-mentioned electrode array and methods of fabricating thereof in the second embodiment are also applied to the IPS-LCD with six sub-pixel areas per pixel. Please refer to Figs. 9A and 9B, which show top views of the electrode array of another IPS-LCD according to the second embodiment of the present invention. In each pixel area, the inter-digitated comb-teeth divide each pixel area into six sub-pixel areas. According to the above-mentioned methods, the third via 42 and a fourth via 44 are respectively formed on the bar on two predetermined regions to which the comb-teeth 14d, 14a extend. Also, as shown in Fig.9A, the first metal-shielding layer 401 covers the comb-tooth 14d, extends to cover the bar of the common electrode 14, and fills the third via 42. The second metal-shielding layer 402 covers the comb-tooth 14a, extends to cover the bar of the common electrode 14, and fills the fourth via 44. Alternatively, as shown in Fig. 9B, the third metal-shielding layer 403 that substitutes the fourth via 44 crosses the data line 24.

Those skilled in the art will readily observe that numerous modifications and alterations of the device may be made while retaining the teaching of the invention. Accordingly, the above disclosure should be construed as limited only by the metes and bounds of the appended claims.

## Claims

1. An in-plane switching mode display device, comprising in this order:
a substrate (10);
a plurality of gate lines (12) disposed on the substrate (10) in an X-dircction;
a plurality of data lines (24) disposed on the substrate (10) in a Y-direction and crossing the gate line (12), wherein two adjacent data lines (24) and two adjacent gate lines (12) constitute a pixel area;
a plurality of comb-shaped common electrodes (14) disposed on the substrate (10) in each pixel area, wherein each comb-shaped common electrode (14) comprises a first bar parallel to the gate lines (12) and a plurality of first comb-teeth (14a, 14b, 14c) extending from the first bar in the Y-direction; and
a plurality of comb-shaped pixel electrodes (26) disposed on the substrate (10) in each pixel area, wherein each comb-shaped pixel electrode (26) comprises a second bar parallel to the gate lines (12) and a plurality of second comb-teeth (26a, 26b) extending from the second bar in the Y-direction and inter-digitated with the first comb-teeth (14a, 14b, 14c) of the comb-shaped common electrodes (14); **characterized by** further comprising:
a protective layer (32) disposed on the comb-shaped pixel electrodes (26);
a connecting layer (38) disposed on the protective layer (32), covering part of the first bar and electrically connecting to one end of the second comb-teeth (26a);
a plurality of first and second conductive shielding layers (401, 402) disposed on the protective layer (32), covering the first comb-teeth (14c, 14a) at either side of the data lines (24),
wherein the connecting layer (38) and the first and second conductive shielding layers (401, 402) arc disposed in the same top conductive layer.

2. The in-plane switching mode display device according to claim 1, wherein the gate lines (12) and the common electrodes (14) are disposed in the same bottom-metal layer.

3. The in-plane switching mode display device according to claim 1, wherein the data line (24) and the pixel electrode (26) are disposed in the same inter-metal layer.

4. The in-plane switching mode display device according to claim 1, wherein the first and second conductive shielding layers (401, 402) electrically connects to the common electrode (14).

5. The in-plane switching mode display device according to claim 1, further comprising a plurality of third metal-shielding layers (403) crossing the data lines (24) to connect the first conductive shielding layer (401) and the second conductive shielding layer (402).

## Patentansprüche

1. In der Ebene schaltende Anzeigevorrichtung, umfassend in dieser Reihenfolge:
ein Substrat (10);
eine Mehrzahl von Gateleitungen (12), die auf dem Substrat (10) in einer X-Richtung angeordnet sind;
eine Mehrzahl von Datenleitungen (24), die auf dem Substrat (10) in einer Y-Richtung angeordnet sind und die Gateleitung (12) schneiden, wobei zwei benachbarte Datenleitungen (24) und zwei benachbarte Gateleitungen (12) einen Pixelbereich bilden;
eine Mehrzahl von kammförmigen gemeinsamen Elektroden (14), die auf dem Substrat (10) in jedem Pixelbereich angeordnet sind, wobei jede kammförmige gemeinsame Elektrode (14) einen ersten Stab parallel zu den Gateleitungen (12) und eine Mehrzahl von ersten Kammzähnen (14a, 14b, 14c) umfasst, die sich vom ersten Stab in der Y-Richtung erstrecken; und
eine Mehrzahl von kammförmigen Pixelelektroden (26), die auf dem Substrat (10) in jedem Pixelbereich angeordnet sind, wobei jede kammförmige Pixelelektrode (26) einen zweiten Stab parallel zu den Gateleitungen (12) und eine Mehrzahl von zweiten Kammzähnen (26a, 26b) umfasst, die sich vom zweiten Stab in der Y-Richtung erstrecken und mit den ersten Kammzähnen (14a, 14b, 14c) der kammförmigen gemeinsamen Elektroden (14) ineinandergreifen; **dadurch gekennzeichnet, dass** sie ferner umfasst:
eine Schutzschicht (32), die auf den kammförmigen Pixelelektroden (26) angeordnet ist;
eine Verbindungsschicht (38), die auf der Schutzschicht (32) angeordnet ist und einen Teil des ersten Stabes abdeckt und elektrisch mit einem Ende der zweiten Kammzähne (26a) verbindet;
eine Mehrzahl von ersten und zweiten leitenden Abschirmungsschichten (401, 402), die auf der Schutzschicht (32) angeordnet sind und die ersten Kammzähne (14c, 14a) auf jeder Seite der Datenleitungen (24) abdecken,
wobei die Verbindungsschicht (38) und die ersten und zweiten leitenden Abschirmungsschichten (401, 402) in derselben oberen leitenden Schicht angeordnet sind.

2. In der Ebene schaltende Anzeigevorrichtung nach Anspruch 1, wobei die Gateleitungen (12) und die gemeinsamen Elektroden (14) in derselben unteren Metallschicht angeordnet sind.

3. In der Ebene schaltende Anzeigevorrichtung nach Anspruch 1, wobei die Datenleitung (24) und die Pixelelektrode (26) in derselben Zwischenmetallschicht angeordnet sind.

4. In der Ebene schaltende Anzeigevorrichtung nach Anspruch 1, wobei die ersten und zweiten leitenden Abschirmungsschichten (401, 402) elektrisch mit der gemeinsame Elektrode (14) verbunden sind.

5. In der Ebene schaltende Anzeigevorrichtung nach Anspruch 1, ferner umfassend eine Mehrzahl von dritten Metallabschirmungsschichten (403), welche die Datenleitungen (24) schneiden, um die erste leitende Abschirmungsschicht (401) und die zweite Abschirmungsschicht (402) zu verbinden.

## Revendications

1. Dispositif d'affichage à commutation dans le plan comprenant, dans cet ordre :
- un substrat (10) ;
- une pluralité de lignes de grille (12) disposées sur le substrat (10) dans une direction X ;
- une pluralité de lignes de données (24) disposées sur le substrat (10) dans une direction Y et coupant les lignes de grille (12), dans lequel deux lignes de données (24) adjacentes et deux lignes de grille (12) adjacentes forment une zone de pixel ;
- une pluralité d'électrodes communes en forme de peigne (14) disposées sur le substrat (10) dans chaque zone de pixel, dans lequel chaque électrode commune en forme de peigne (14) comprend une première barre, parallèle aux lignes de grille (12), et une pluralité de premières dents de peigne (14a, 14b, 14c) s'étendant depuis la première barre dans la direction Y ; et
- une pluralité d'électrodes de pixel en forme de peigne (26) disposées sur le substrat (10) dans chaque zone de pixel, dans lequel chaque électrode de pixel en forme de peigne (26) comprend une deuxième barre, parallèle aux lignes de grille (12), et une pluralité de deuxièmes dents de peigne (26a, 26b) s'étendant depuis la deuxième barre dans la direction Y et interdigitées avec les premières dents de peigne (14a, 14b, 14c) des électrodes communes en forme de peigne (14) ;
**caractérisé en ce qu'**il comprend en outre :
- une couche de protection (32) disposée sur les électrodes de pixel en forme de peigne (26) ;
- une couche de connexion (38) disposée sur la couche de protection (32), couvrant une partie de la première barre et établissant une connexion électrique avec une extrémité des deuxièmes dents de peigne (26a) ;
- une pluralité de premières et deuxièmes couches de blindage conductrices (401, 402) disposées sur la couche de protection (32), couvrant les premières dents de peigne (14c, 14a) de part et d'autre des lignes de données (24),
dans lequel la couche de connexion (38) et les première et deuxième couches de blindage conductrices (401, 402) sont disposées dans la même couche conductrice supérieure.

2. Dispositif d'affichage à commutation dans le plan selon la revendication 1, dans lequel les lignes de grille (12) et les électrodes communes (14) sont disposées dans la même couche métallique inférieure.

3. Dispositif d'affichage à commutation dans le plan selon la revendication 1, dans lequel la ligne de données (24) et l'électrode de pixel (26) sont disposées dans la même couche métallique intermédiaire.

4. Dispositif d'affichage à commutation dans le plan selon la revendication 1, dans lequel les première et deuxième couches de blindage conductrices (401, 402) établissent une connexion électrique avec l'électrode commune (14).

5. Dispositif d'affichage à commutation dans le plan selon la revendication 1, comprenant en outre une pluralité de troisièmes couches de blindage métalliques (403) coupant les lignes de données (24) afin de connecter la première couche de blindage conductrice (401) et la deuxième couche de blindage conductrice (402).
